# FASCICULE DE BREVET EUROPEEN

(11) **EP 2 863 074 B1**
(45) Date de publication et mention de la délivrance du brevet: **31.01.2018**
(21) Numéro de dépôt: 14188956.8
(22) Date de dépôt: 15.10.2014
(51) Int. Cl.: F16B 21/16

(54) **Broches à billes à levier**
Klemmvorrichtung mit Hebel und Kugeln
Ball lock with lever

(30) Priorité: 18.10.2013 FR 1360154
(43) Date de publication de la demande: 22.04.2015
(73) Titulaire: LISI Aerospace, 75012 Paris (FR)
(72) Inventeur: Langlais, Sébastien, 31170 Tournefeuille (FR); Defrance, Vincent, 18000 Bourges (FR); Bellavia, Bastien, 18120 Mereau (FR)
(74) Mandataire: Ipside

(56) Documents cités:
- EP-A2- 0 379 282
- US-A- 2 779 228
- US-A- 2 786 383
- US-A- 2 816 471
- US-A- 2 898 797
- US-A- 2 901 804
- US-A- 2 968 205
- US-A- 3 445 082

## Description

La présente invention se rapporte à une fixation à déverrouillage rapide, couramment utilisée dans l'aéronautique et connue sous le nom de broche à billes.

Une broche à billes comprend généralement un corps tubulaire comprenant au moins une ouverture radiale, une tête formant une surface d'appui contre une face accessible de la structure à l'intérieur de laquelle le corps est inséré, une tige qui peut se déplacer axialement dans le corps, une bille disposée dans le corps et qui est selon la position de la tige, repoussée vers l'extérieur dans l'ouverture radiale en une position de verrouillage de sorte à s'appuyer contre une face de la structure opposée à la face accessible, ainsi qu'un mécanisme d'actionnement de la tige, sous forme d'un bouton ou d'un levier. On peut déverrouiller ce type de fixation en actionnant le mécanisme et en tirant sur un anneau ou un levier pourvu sur la tête de la fixation.

Il est connu du document US 2786 383 une broche à billes du type précité, représentée en figure 1. Elle comporte un membre tubulaire 10 et une tête 12, une ou plusieurs ouvertures radiales 15 sur le fût 14 du membre tubulaire 10 à l'intérieur desquelles une bille 17 est placée. Chaque bille est apte à se déplacer radialement dans un perçage entre une position de verrouillage où une portion de la bille dépasse vers l'extérieur du fût 14, et une position de déverrouillage où la bille est entièrement contenue dans le corps sans dépasser du fût. Un moyen 18, sous la forme d'une tige 19, permet de déplacer sélectivement les billes d'une position à l'autre. La tige 19 est cylindrique. Ladite tige comprend, près d'une extrémité, une section de diamètre réduit, apte à recevoir les billes en position de déverrouillage. La tige 19 comprend à son extrémité opposée une tête 20 élargie, de dimensions telles que la tête 20 de la tige ne peut coulisser à l'intérieur du membre tubulaire 10. Un levier 26 pivotant autour d'un axe 27 fixé à la tête 12 de la fixation, présente une surface de came 31, 32 qui prend appui contre la tête 20 élargie. Selon la position du levier autour de l'axe 27, la surface de came 31, 32 appuie plus ou moins sur la tête 20 élargie de la tige, ce qui pousse celle-ci dans le membre tubulaire 10 pour déverrouiller la broche, ou tire la tige vers la tête 12 de la fixation pour verrouiller la broche.

En position déverrouillée, le levier 26 s'étend parallèlement à la tige 19. La manipulation d'une telle fixation est délicate car il faut insérer d'abord le corps puis le lâcher avant de saisir le levier, alors même que la fixation n'est pas verrouillée. De plus, la portion du corps entre les ouvertures radiales et l'extrémité libre est très longue, ce qui peut poser un problème d'encombrement si l'espace libre derrière la structure est réduit.

L'invention a pour but de résoudre les problèmes des fixations de l'art antérieur, et notamment de permettre une manipulation aisée de la fixation et de pouvoir être utilisée même dans une structure disposant de peu d'espace environnant.

Pour cela, l'invention fournit une fixation selon la revendication 1. La cinématique inversée par rapport aux fixations connues permet d'obtenir une fixation ayant un très faible encombrement à l'extrémité libre.

La fixation selon l'invention présente également de préférence au moins une des caractéristiques ci-dessous :
- la tige comporte un moyen anti-rotation bloquant la rotation du levier vis-à-vis de la tête,
- le moyen anti-rotation est constitué d'une lumière de forme oblongue ménagée sur la tige et un axe transversal passant au travers de la tête et de la lumière,
- le levier est en contact avec la poignée en position de déverrouillage,
- tête comprend une face d'appui destinée à entrer en contact avec une structure et une face arrière disposée à l'opposé de la face d'appui, la tête étant percée longitudinalement depuis la face d'appui jusqu'à la face arrière,
- la surface de came est en appui contre la face arrière de la tête,
- un ressort de compression est logé dans le perçage de la tête.

D'autres buts, caractéristiques et avantages de l'invention apparaîtront à la lecture de la description des modes de réalisation de l'invention, description faite en liaison avec les dessins dans lesquels:
- la figure 1 est une vue en coupe d'une fixation à déverrouillage rapide de l'art antérieur, déjà décrite,
- la figure 2 est une vue isométrique de la fixation à déverrouillage rapide selon une forme préférée de l'invention, en position verrouillée,
- la figure 3 est une vue en coupe de la fixation à déverrouillage rapide selon une forme préférée de l'invention dans une position verrouillée,
- la figure 4 est une vue en coupe de la fixation à déverrouillage rapide selon une forme préférée de l'invention dans une position déverrouillée.

Pour faciliter la lecture des dessins, seuls les éléments nécessaires à la compréhension de l'invention ont été représentés. Les mêmes éléments portent les mêmes références d'un dessin à l'autre.

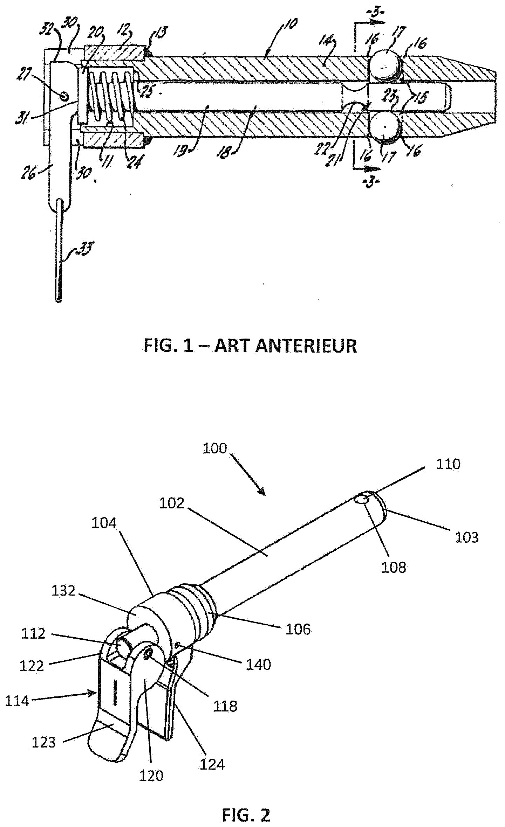

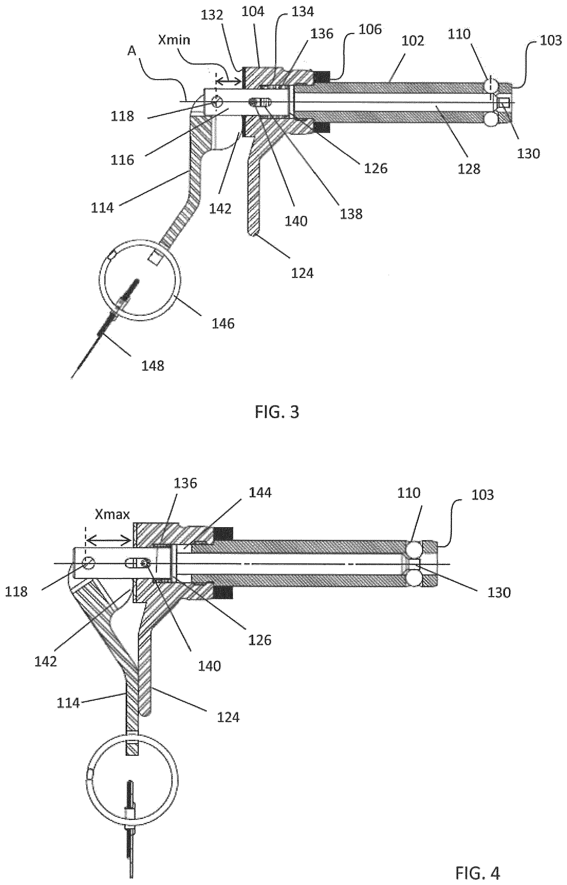

Comme le montrent les figures 2 et 3, la fixation à déverrouillage rapide appelée broche à billes 100 dans la suite de la description comporte un corps 102 tubulaire d'axe de révolution A, s'étendant longitudinalement sur cet axe A. A une extrémité terminale 103, le corps 102 comprend deux ouvertures radiales 108 dont une seulement est visible dans cette figure. Bien sûr, le nombre d'ouvertures peut varier, et le corps peut comprendre une, deux, trois ou quatre ouvertures radiales. Dans la position verrouillée, une bille 110 dépasse du corps 102 au travers de l'ouverture radiale 108, hors de la structure à assembler. L'autre extrémité du corps 102 est insérée dans une tête 104 de section plus large. La tête 104 comporte une surface d'appui 106 apte à venir en contact avec la surface d'une structure dans laquelle est réalisé le perçage, à l'intérieur duquel le corps 102 est destiné à s'insérer.

La broche à billes 100 comporte une tige 112 traversant la tête 104 et s'étendant à l'intérieur du corps 102, le long d'un axe coïncident à l'axe de révolution A. Un levier 114 est relié à une première extrémité 116 de la tige dépassant de la tête 104, au moyen d'un axe 118 transversal, traversant deux parois parallèles 120, 122 du levier et l'extrémité 116 de la tige. Le levier est monté pivotant autour de l'axe 118, et peut être actionné manuellement au moyen d'une portion de manipulation 123. L'axe 118 s'étend dans un plan comprenant l'axe de révolution A.

La broche à billes 100 comporte de plus une poignée 124 qui dans cet exemple fait partie intégrante de la tête 104. En variante, la poignée 124 peut être un élément rapporté et fixé de manière inamovible à la tête. La poignée 124 s'étend sensiblement perpendiculairement au corps 102 et possède une forme ergonomique facilitant sa préhension manuelle. Le plan principal de la poignée est disposé à distance du plan passant par la face d'appui 106 de sorte qu'un opérateur puisse passer les doigts dans l'espace ménagé entre la poignée et une face d'une structure dans laquelle la broche 100 est installée.

Comme on le voit en détail sur la figure 3, la tige comprend consécutivement une première extrémité 116, reliée au levier 114, une portion élargie 126, une portion cylindrique 128 de diamètre réduit par rapport à la portion élargie 126 apte à coulisser à l'intérieur du corps 102, et une seconde extrémité 130, de diamètre réduit par rapport à la portion cylindrique. En position verrouillée, les billes 110 reposent sur la portion cylindrique 128. La seconde extrémité 130 de la tige s'étend dans le corps, entre les ouvertures radiales et l'extrémité terminale 103 du corps.

La tête 104 est percée sur toute sa longueur, depuis la face d'appui 106 jusqu'à une face arrière 132 disposée à l'opposé de la face d'appui, de sorte à contenir différentes portions de la tige 112. Ainsi, le diamètre de l'ouverture dans la face d'appui 106 correspond au diamètre extérieur du corps 102. Le diamètre de l'ouverture dans la face arrière 132 correspond au diamètre extérieur de la première extrémité 116 de la tige 112.

Le raccordement entre les diamètres d'ouverture des deux faces s'effectue par un épaulement 134. Dans l'espace ménagé entre l'épaulement 134 et la portion élargie 126 de la tige est disposé un ressort 136 de compression. Le ressort tend à repousser la portion élargie 126 de la tige de l'épaulement 134 afin de maintenir la position verrouillée.

La première extrémité 116 de la tige comprend une lumière 138 de forme oblongue, s'étendant longitudinalement le long de l'axe de révolution A. Un axe 140 transversal est disposé au travers de la lumière 138 et de la tête 104 afin de bloquer tout mouvement de rotation du levier 114 par rapport à la tête 104. La lumière 138 et l'axe 140 transversal forment ensemble un moyen anti-rotation du levier 114 par rapport à la tête 104. La longueur de la lumière oblongue 138 est sélectionnée en fonction de la longueur de la seconde extrémité 130 de la tige 112 et en fonction de la course du ressort. L'axe 140 transversal peut coulisser à l'intérieur de la lumière 138 entre une position de verrouillage où l'axe 140 est en butée contre une paroi de la lumière 138 orientée vers l'extrémité 116, et une position de déverrouillage où l'axe 140 est en butée contre une paroi de la lumière 138 orientée vers la seconde extrémité 130. L'axe 140 s'étend dans un plan comprenant l'axe de révolution A.

Les parois parallèles 120, 122 du levier sont identiques et possèdent chacune une surface de came 142 constamment en contact avec la face arrière 132 de la tête 104. La surface de came est apte à faire varier la distance entre l'axe 118 et la face arrière 132, mesuré selon l'axe de révolution A, entre une distance Xmin minimale représentée à la figure 3 correspondant à une position de verrouillage de la fixation, et une distance Xmax maximale représentée à la figure 4, correspondant à une position de déverrouillage de la fixation. En position de verrouillage, l'axe 118 est au plus près de la face arrière 132, donc la tige 112 est poussée au maximum dans le corps 102. En position de déverrouillage, l'axe 118 est au plus loin de la face arrière 132, donc la tige 112 est tirée au maximum hors du corps 102.

La figure 4 illustre la broche à billes en position déverrouillée. Dans cette position, la portion de manipulation 123 est en contact avec la poignée 124. L'axe 118 est dans une position éloignée au maximum de la face arrière 132 et la tige 112 est tirée vers la face arrière 132, laissant un espace 144 dans la tête 104, entre la portion élargie 126 et l'extrémité du corps 102 insérée dans la face avant 106. L'espace 144 correspond à la course de compression du ressort 136. L'axe 140 transversal est ici en butée contre la paroi de la lumière 138 orientée vers la seconde extrémité 130 de la tige. La seconde extrémité 130 de la tige 112 est décalée de l'extrémité terminale 103 du corps vers la face arrière 132 d'une distance équivalente à la course de compression du ressort, de sorte à se trouver en regard des ouvertures 108 du corps. Les billes 110 reposent ainsi sur la seconde extrémité 130 de la tige, et ne dépassent pas à l'extérieur du corps.

Pour installer la broche à billes 100, un opérateur saisit la fixation par les portions en contact du levier 114 et de la poignée 124, insère le corps 102 dans un perçage réalisé préalablement dans une structure jusqu'à ce que la face avant 106 entre en contact avec la structure et que l'extrémité 103 du corps ressorte de l'autre côté de la structure. Pour verrouiller la fixation 100, l'opérateur relâche la pression des doigts exercée sur le levier 114. Sous l'action du ressort 136 de compression qui pousse la portion élargie 126 vers la structure lors de sa détente, l'axe 118 est tiré vers la face arrière 132 de la tête, faisant alors pivoter le levier 114 autour de l'axe 118 transversal. Les billes 110 sont repoussées vers l'extérieur du corps lors de la traction de la tige 112 dans le corps, de sorte à bloquer tout mouvement de la broche 100. L'opérateur peut lâcher la poignée 124.

Pour enlever la broche à billes 100, un opérateur saisit la fixation par la portion de manipulation 123 du levier 114 et par la poignée 124. La pression des doigts sur la portion de manipulation 123 est suffisante pour comprimer le ressort 136 et faire pivoter le levier autour de l'axe 118 et l'amener au contact de la poignée 124. La rotation des surfaces de came du levier entraîne la tige 112 vers la face arrière 132, et débloque les billes 110. L'opérateur peut ensuite extraire la fixation 100 d'une seule main.

Une telle fixation est ainsi d'une manipulation aisée puisqu'elle ne nécessite qu'une seule main. Cette fixation présente également l'avantage d'avoir un corps dont l'extrémité terminale est très compacte, du fait que seule la seconde extrémité 130 de la tige doit être logée entre les ouvertures radiales 108 et l'extrémité terminale 103 du corps. Elle peut donc être utilisée dans une structure elle-même disposée dans un espace confiné. Enfin, une seule pression sur le levier 123 permet de déverrouiller la fixation.

De manière connue, le levier peut comporter en extrémité de la portion de manipulation 123 un anneau 146 sur lequel est attaché un indicateur visuel 148 de la présence d'une broche à billes 100 installée dans la structure.

## Revendications

1. Fixation (100) à déverrouillage rapide comprenant un corps (102) tubulaire d'axe de révolution (A) dont une portion comporte au moins une ouverture radiale (108), une tête (104) élargie, une tige (112) qui peut se déplacer axialement dans le corps et au travers de la tête, la tige comprenant à une seconde extrémité (130) une portion de diamètre réduit, au moins une bille (110) apte à se déplacer radialement entre une position de déblocage où elle repose dans la portion de diamètre réduit de la tige (112) à l'intérieur du corps, et une position de blocage où elle dépasse radialement à l'extérieur du corps au travers de l'ouverture radiale (108), un levier (114) pivotant autour d'un axe (118) solidaire de la tige et du levier, le levier comprenant au moins une surface de came (142) en contact avec la tête, la fixation étant configurée de sorte qu'une rotation du levier entraîne une traction de la tige en direction de la tête, de manière à amener la bille en position de déblocage, **caractérisée en ce que** la fixation comprend une poignée (124) agencée fixe sur la tête (104).

2. Fixation (100) selon la revendication 1, dans laquelle la tige (112) comporte un moyen anti-rotation (138, 140) bloquant la rotation du levier vis-à-vis de la tête.

3. Fixation (100) selon la revendication 2, dans laquelle le moyen anti-rotation est constitué d'une lumière (138) de forme oblongue ménagée sur la tige et un axe transversal (140) passant au travers de la tête et de la lumière.

4. Fixation (100) selon l'une des revendications précédentes, dans laquelle le levier est en contact avec la poignée en position de déverrouillage.

5. Fixation (100) selon l'une des revendications précédentes, dans laquelle la tête (104) comprend une face d'appui (106) destinée à entrer en contact avec une structure et une face arrière (132) disposée à l'opposé de la face d'appui, la tête étant percée longitudinalement depuis la face d'appui jusqu'à la face arrière.

6. Fixation (100) selon la revendication 5, dans laquelle la surface de came est en appui contre la face arrière.

7. Fixation (100) selon la revendication 5 ou la revendication 6, dans laquelle un ressort de compression (136) est logé à l'intérieur du perçage de la tête.

## Patentansprüche

1. Befestigung (100) mit Schnellentriegelung, umfassend einen röhrenförmigen Körper (102) mit einer Umdrehungsachse (A), bei der ein Abschnitt mindestens eine radiale Öffnung (108), einen erweiterten Kopf (104), eine Stange (112), die sich axial im Körper und durch den Kopf verschieben kann, wobei die Stange an einem zweiten Ende (130) einen Abschnitt mit reduziertem Durchmesser umfasst, mindestens eine Kugel (110), die geeignet ist, sich radial zwischen einer Freigabeposition, in der sie in dem Abschnitt mit reduziertem Durchmesser der Stange (112) innerhalb des Körpers liegt, und einer Feststellposition zu verschieben, in der sie radial aus dem Körper durch die radiale Öffnung (108) hinausragt, einen Hebel (114), der um eine Achse (118), die mit der Stange und dem Hebel verbunden ist, schwenkt, wobei der Hebel mindestens eine Nockenfläche (142) in Kontakt mit dem Kopf umfasst, umfasst, wobei die Befestigung derart konfiguriert ist, dass eine Drehung des Hebels zu einem Zug der Stange in Richtung des Kopfes führt, um die Kugel in die Freigabeposition zu bringen, **dadurch gekennzeichnet, dass** die Befestigung einen Griff (124) umfasst, der fest auf dem Kopf (104) angeordnet ist.

2. Befestigung (100) nach Anspruch 1, bei der die Stange (112) ein Antirotationsmittel (138, 140) umfasst, das die Rotation des Hebels gegenüber dem Kopf feststellt.

3. Befestigung (100) nach Anspruch 2, bei der das Antirotationsmittel von einer Öffnung (138) von länglicher Form, die auf der Stange vorgesehen ist, und einer Querachse (140), die durch den Kopf und die Öffnung verläuft, gebildet ist.

4. Befestigung (100) nach einem der vorhergehenden Ansprüche, bei der der Hebel mit dem Griff in Entriegelungsposition in Kontakt ist.

5. Befestigung (100) nach einem der vorhergehenden Ansprüche, bei der der Kopf (104) eine Auflagefläche (106), die dazu bestimmt ist, mit einer Struktur in Kontakt zu kommen, und eine Rückseite (132) umfasst, die gegenüber der Auflagefläche angeordnet ist, wobei der Kopf längs von der Auflagefläche bis zur Rückseite durchbohrt ist.

6. Befestigung (100) nach Anspruch 5, bei der die Nockenfläche an der Rückseite aufliegt.

7. Befestigung (100) nach Anspruch 5 oder Anspruch 6, bei der eine Kompressionsfeder (136) innerhalb der Bohrung des Kopfes angeordnet ist.

## Claims

1. Fastener (100) with quick unlocking comprising a tubular body (102) of axis of revolution (A) of which a portion comprises at least one radial opening (108), an enlarged head (104), a rod (112) which can move axially in the body and through the head, the rod comprising a reduced-diameter portion at a second end (130), at least one ball (110) able to move radially between an unblocking position where it rests in the reduced-diameter portion of the rod (112) inside the body, and a blocking position where it protrudes radially beyond the outside of the body through the radial opening (108), and a lever (114) pivoting about a pin (118) secured to the rod and to the lever, the lever comprising at least one cam surface (142) in contact with the head, the fastener being configured such that a rotation of the lever causes the rod to be pulled in the direction of the head so as to bring the ball into the unblocking position, **characterized in that** the fastener comprises a handle (124) arranged fixedly on the head (104).

2. Fastener (100) according to Claim 1, in which the rod (112) comprises an anti-rotation means (138, 140) blocking the rotation of the lever with respect to the head.

3. Fastener (100) according to Claim 2, in which the anti-rotation means consists of a slot (138) of oblong shape formed in the rod and a transverse pin (140) passing through the head and the slot.

4. Fastener (100) according to one of the preceding claims, in which the lever is in contact with the handle in the unlocking position.

5. Fastener (100) according to one of the preceding claims, in which the head (104) comprises a bearing face (106) intended to come into contact with a structure, and a rear face (132) arranged on the opposite side to the bearing face, the head being bored longitudinally from the bearing face to the rear face.

6. Fastener (100) according to Claim 5, in which the cam surface bears against the rear face.

7. Fastener (100) according to Claim 5 or Claim 6, in which a compression spring (136) is housed inside the bore of the head.
